# DEMANDE DE BREVET EUROPEEN

(11) **EP 3 960 837 A1**
(43) Date de publication de la demande: **02.03.2022**
(21) Numéro de dépôt: 21193577.0
(22) Date de dépôt: 27.08.2021
(51) Int. Cl.: C10B 49/08, C10B 51/00, C10B 53/02, C10K 3/00, C10J 3/20, C10J 3/26

(54) **RÉACTEUR DE PYRO-GAZÉIFICATION A LIT FIXE PRÉSENTANT UN RENDEMENT AMÉLIORÉ**

(30) Priorité: 31.08.2020 FR 2008808
(71) Demandeur: Commissariat à l'énergie atomique et aux énergies alternatives, 75015 Paris (FR)
(72) Inventeur: RAVEL, Serge, 38054 GRENOBLE CEDEX 09 (FR)
(74) Mandataire: Brevalex

(57) **Abrégé**

Réacteur de pyro-gazéification à lit fixe comportant une enceinte (2), des moyens (4) pour alimenter l'enceinte en matière carbonée de sorte à former un lit dans l'enceinte (2), situés dans une partie supérieure de l'enceinte (2), un conduit (10) s'étendant verticalement dans l'enceinte (2) de sorte à être entouré par la matière carbonée, le conduit (10) comprenant une extrémité (10.1) pour la collecte du syngaz, une alimentation en air secondaire (12) pour l'injecter dans le conduit, par une autre extrémité (10.2) du conduit (10), des moyens (11) pour injecter du méthane dans le conduit (10) par l'autre extrémité (10.2) du conduit (10), une alimentation en air primaire (14) pour l'injecter dans l'enceinte (2) dans une zone de combustion de l'enceinte et un système d'allumage (13) au niveau de l'autre extrémité (10.2) du conduit (10) de sorte à provoquer la combustion du mélange d'air et de gaz, tel que du méthane ou du gaz de pyrolyse.

## Description

### DOMAINE TECHNIQUE ET ÉTAT DE LA TECHNIQUE ANTÉRIEURE

La présente invention se rapporte à un réacteur à lit fixe pour la production de gaz de synthèse par pyro-gazéification.

La production d'énergie par gazéification de biomasses et déchets fait partie des nombreuses solutions qui contribueront à opérer une transition énergétique.

La pyro-gazéification permet de produire des gaz de synthèse utilisables dans des moteurs à gaz, des turbines à gaz...

La pyro-gazéification en lit fixe met en œuvre plusieurs étapes :
- la combustion d'une petite partie de la matière carbonée,
- la pyrolyse de la matière carbonée,
- la gazéification qui dégage du monoxyde de carbone et du dihydrogène.

La pyro-gazéification à lit fixe a lieu dans un réacteur qui est alimenté en matière carbonée généralement par le haut du réacteur, une alimentation en air est prévue pour la combustion partielle et le gaz de synthèse, désigné syngaz, est récupéré par le haut ou par le bas du réacteur. Le gaz de synthèse ou syngaz est un gaz combustible riche en monoxyde de carbone (CO) et en hydrogène (H₂).

Les différentes étapes ont lieu à différents niveaux dans le réacteur et la disposition relative des niveaux dans la direction verticale est fonction du lieu de collecte du syngaz, i.e. en haut du réacteur ou en bas du réacteur.

Outre le syngaz, des goudrons sont produits lors de l'étape de pyrolyse.

Les réacteurs à co-courant produisent généralement moins de goudrons que les réacteurs à contre-courant car les gaz de pyrolyse passent au travers de la zone de combustion où ils sont craqués thermiquement ou brulés.

Dans certains réacteurs à lit fixe existants, afin de réduire la quantité de goudrons dans le syngaz un dispositif de craquage thermique ou catalytique du goudron à l'extérieur du réacteur est prévu en aval du réacteur. Ce système requiert un dispositif indépendant positionné sur la ligne de sortie du syngaz.

En outre on cherche à augmenter le rendement des réacteurs de pyro-gazéification.

### EXPOSÉ DE L'INVENTION

C'est par conséquent un but de la présente invention d'offrir un réacteur de pyro-gazéification présentant un rendement augmenté et générant moins de goudrons que les réacteurs de l'état de la technique.

Les buts énoncés ci-dessus sont atteints par un réacteur de pyro-gazéification dans lequel une partie des gaz de synthèse produits dans le réacteur est utilisée pour chauffer le réacteur et pour créer une zone à haute température assurant un craquage d'au moins une partie des goudrons.

De préférence, la zone de combustion des gaz de synthèse et de craquage des goudrons est ménagée dans un conduit traversant verticalement le lit de matière et situé de préférence au centre de celui-ci assurant une répartition plus homogène de la chaleur dans la matière.

De manière avantageuse, le conduit forme un arbre rotatif muni de bras ou de pales et assurant en outre un brassage de la matière et une répartition homogène des gaz et de la chaleur dans celle-ci.

En d'autres termes, on utilise une partie des gaz de synthèse produits pour apporter de la chaleur au réacteur, la combustion de ces gaz crée une zone chaude qui est traversée par l'autre partie des gaz de synthèse, qui sont alors chauffés à haute température provoquant le craquage d'une grande partie des goudrons produits.

Un des objets de la présente demande a alors pour objet un réacteur de pyro-gazéification à lit fixe comportant une enceinte s'étendant selon une direction longitudinale destinée à être orientée verticalement, des moyens pour alimenter l'enceinte en matière carbonée de sorte à former un lit dans l'enceinte, situés dans une partie supérieure de l'enceinte, un conduit s'étendant le long de la direction longitudinale et situé dans l'enceinte de sorte à être entouré par la matière carbonée, le conduit comprenant une première extrémité longitudinale destinée à la collecte des produits résultant de la transformation de la matière carbonée dans le réacteur, une alimentation en air secondaire pour injecter de l'air dans le conduit, par une deuxième extrémité longitudinale du conduit, des moyens pour injecter du gaz combustible dans le conduit par la deuxième extrémité longitudinale du conduit, une alimentation en air primaire pour injecter de l'air dans l'enceinte dans une zone de combustion de l'enceinte et des moyens d'allumage au niveau de la deuxième extrémité longitudinale du conduit, de sorte à provoquer la combustion du mélange d'air et de gaz.

De préférence, le conduit comporte un revêtement réfractaire.

Le conduit comporte avantageusement des bras s'étendant sensiblement radialement à partir de la surface latérale du conduit.

Le matériau du conduit et le matériau des bras assurent avantageusement la conduction de la chaleur de l'intérieur du conduit vers l'extérieur de conduit.

De manière préférée, le conduit s'étend au centre de l'enceinte.

Dans un exemple préféré, le conduit est formé par un arbre creux monté tournant dans l'enceinte autour d'une direction longitudinale de l'enceinte, ledit réacteur comportant des moyens de mise en rotation de l'arbre.

Selon une caractéristique additionnelle, le réacteur de pyro-gazéification comporte un joint à eau entre l'enceinte et le conduit.

Selon une caractéristique additionnelle, le réacteur de pyro-gazéification comporte des moyens de collecte des produits générés dans le réacteur connectés à la première extrémité du conduit par un presse-étoupe.

Dans un exemple de réalisation, la première extrémité du conduit fait saillie d'un fond supérieur de l'enceinte, et l'alimentation en air primaire traverse la paroi latérale de l'enceinte de sorte à injecter de l'air dans le lit de matière carboné. Le réacteur est alors un réacteur co-courant.

Dans un autre exemple de réalisation, la première extrémité du conduit fait saillie d'un fond inférieur de l'enceinte et l'alimentation en air primaire est située de sorte à injecter de l'air sous le lit de matière carboné. Le réacteur est alors un réacteur à contre-courant.

De préférence, les moyens d'alimentation en gaz sont configurés pour qu'au cours du fonctionnement le débit de gaz injecté dans le conduit diminue.

Un autre objet de la présente demande est un procédé de fonctionnement d'un réacteur de pyro-gazéification selon la présente demande, dans lequel :
- lors d'une phase un mélange d'air et de gaz est brûlé dans le conduit,
- lors d'une étape suivante une partie du gaz de synthèse produit dans le réacteur est brulée dans le conduit, chauffant le réacteur et l'intérieur du conduit, et au moins une partie des goudrons produits dans le réacteur est craquée dans le conduit.

Dans un exemple de fonctionnement, le débit de gaz au niveau des moyens d'alimentation en gaz est réduit au fur et à mesure que le débit de gaz de synthèse augmente, jusqu'à devenir nul.

### BRÈVE DESCRIPTION DES DESSINS

La présente invention sera mieux comprise sur la base de la description qui va suivre et des dessins en annexe sur lesquels:
La figure 1 est une représentation schématique d'un exemple de réalisation d'un réacteur de pyro-gazéification à co-courant.
La figure 2 est une représentation schématique d'un exemple de réalisation d'un réacteur de pyro-gazéification à contre-courant.

### EXPOSÉ DÉTAILLÉ DE MODES DE RÉALISATION PARTICULIERS

Le réacteur selon l'invention utilise de la matière carbonée qui peut être du bois, des résidus agricoles (pailles, noyaux, ...), ou des déchets papiers ou plastiques. La plus petite dimension des particules de matière carbonée est de quelques millimètres à quelques centimètres. Avantageusement les particules sont de quelques cm de dimension dans les trois axes.

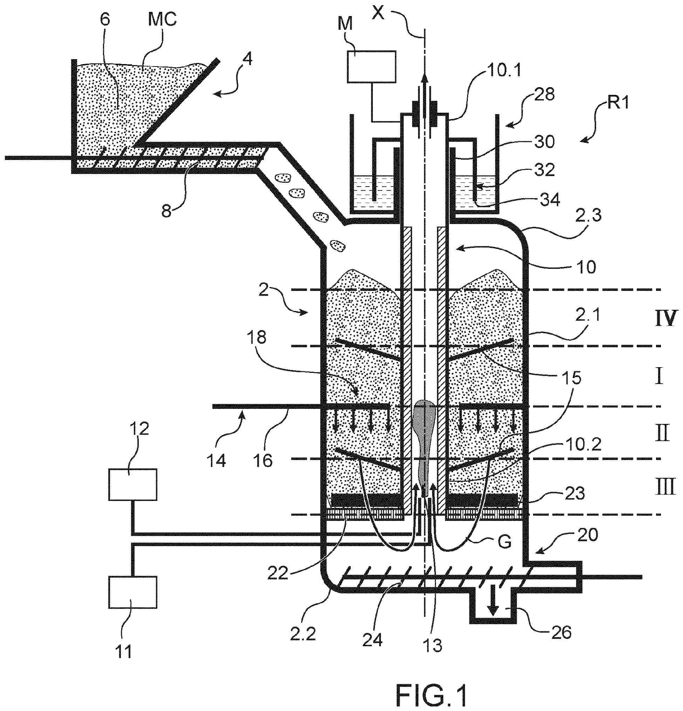

Sur la figure 1, on peut voir un exemple de réalisation d'un réacteur de pyro-gazéification à co-courant R1 comportant une enceinte 2 d'axe longitudinal X délimitée par une paroi latérale 2.1, un fond inférieur 2.2 et un fond supérieur 2.3.

Le réacteur comporte également une alimentation 4 en matière carbonée qui fait entrer la matière par le fond supérieur 2.3 de l'enceinte. L'alimentation 4 comporte par exemple une trémie 6 et une vis de convoyage 8. A l'extrémité de la vis de convoyage, la matière tombe par gravité dans l'enceinte. L'axe X est destiné à être orienté verticalement.

Le réacteur comporte un arbre central creux 10 coaxial à l'axe X qui s'étend sur une grande partie de la hauteur de l'enceinte. L'arbre traverse le fond supérieur 2.3 de l'enceinte. L'arbre comporte une extrémité longitudinale supérieure 10.1 par laquelle les gaz de synthèse sont collectés à l'extérieur du réacteur, et une extrémité longitudinale inférieure 10.2 connectée à une alimentation 12 en air, appelé alimentation en air secondaire, et à une alimentation 11 en gaz combustible pour initier le chauffage du réacteur, il s'agit par exemple de gaz naturel ou de méthane. Un système d'allumage 13, par exemple de type piézoélectrique, est prévu. Celui-ci est de préférence situé au niveau l'extrémité longitudinale inférieure 10.2 afin de transmettre la chaleur à une grande surface de l'arbre.

L'arbre 10 est avantageusement monté tournant dans l'enceinte et porte des bras ou des pales 15 s'étendant sensiblement radialement vers l'extérieur à partir de l'arbre. Lorsque l'arbre 10 est mis en rotation, les bras 15 assurent un brassage de la matière favorisant la distribution homogène des gaz dans la matière. Le réacteur comporte de moyens pour mettre en rotation l'arbre, par exemple il s'agit d'un moteur électrique M disposé à l'extérieur de l'enceinte et relié mécaniquement à l'arbre, par exemple par un jeu de pignon.

L'arbre est de préférence réalisé en acier réfractaire, par exemple en Inconel 600 ou Inconel 625, ou équivalent. De préférence également la surface intérieure de l'arbre est recouverte d'un matériau réfractaire pour le protéger de la chaleur, le matériau réfractaire est par exemple un revêtement céramique ou est sous forme d'un tube logé dans l'arbre. De préférence, le matériau réfractaire est tel que la température de l'arbre reste inférieure à 800°C.

Le réacteur comporte une deuxième alimentation en air 14, appelée alimentation en air primaire, configurée pour injecter l'air dans le lit de matière carbonée. La deuxième alimentation comporte par exemple un tube 16 traversant la paroi latérale de l'enceinte connecté à un distributeur 18 situé dans l'enceinte et répartissant l'air dans le lit, de préférence de manière homogène.

Dans la partie inférieure de l'enceinte, une zone 20 de récupération des cendres est ménagée entre le fond inférieur et une grille 22 sur laquelle repose la matière carbonée.

Le réacteur comporte des moyens d'extraction des cendres dans la zone de récupération 20 comportant par exemple une vis de convoyage 24, qui transporte les cendres jusqu'à une ouverture d'évacuation 26 réalisée dans le fond inférieur de l'enceinte.

Avantageusement, un système de raclage 23 est prévu sur la grille, par exemple des éléments de raclage sont solidaires en rotation de l'arbre et raclent la face supérieure de la grille assurant l'écoulement des cendres à travers celle-ci. Ces éléments de raclage des cendres sont de préférence montés sur des roulettes situés bout des racleurs pour assurer le support de l'arbre et faciliter sa rotation.

L'étanchéité entre l'arbre et le fond supérieur de l'enceinte est avantageusement réalisé au moyen d'un joint à eau 28, ce qui permet d'assurer l'étanchéité tournante tout en palliant les phénomènes de dilatation différentielle entre l'arbre et l'enceinte. Dans cet exemple l'enceinte se prolonge vers le haut par un manchon 30 bordant la deuxième extrémité de l'arbre et le joint à eau 28 comporte un réservoir annulaire entourant le manchon et rempli en partie d'eau, et la deuxième extrémité de l'arbre comporte une coupelle 32 retournée bordant son extrémité longitudinale et dont le bord libre 34 est immergé dans l'eau du réservoir.

La connexion entre l'extrémité longitudinale supérieure de l'arbre et les moyens de collecte des gaz de synthèse est par exemple réalisée au moyen d'un presse-étoupe, cette zone étant à basse température, par exemple à une température inférieure à 200°C.

Le fonctionnement du réacteur R1 va maintenant être décrit.

Le réacteur R1 est rempli de matière carbonée MC formant un lit dans le réacteur entourant l'arbre 10. Le lit a une hauteur suffisante pour que la matière carbonée recouvre l'alimentation en air primaire.

A titre d'exemple, pour un réacteur de diamètre égal à 50 cm pour une hauteur de 1m avec un arbre central de 10 cm de diamètre, le volume disponible pour la ressource est de 188 litres au plus. Si on considère le réacteur plein à 80%, le volume de ressource est de 150 litres soit environ entre 30 kg et 50 kg de matières. Pour un débit de 50 kg/h, la ressource passera environ une heure dans le four.

Le lit est le siège de plusieurs phénomènes ou réactions ayant lieu simultanément dans des zones superposées. Ces zones sont schématisées sur la figure 1.

La zone I est la zone où a lieu la pyrolyse, dont la température est comprise entre environ 300°C et environ 800°C.

La zone II est la zone où a lieu la combustion partielle de la matière carbonée, dont la température est entre 800°C et environ 1000°C.

La zone III est la zone où a lieu la gazéification, dont la température est comprise entre environ 800°C et environ 1000°C.

La zone IV est la zone de séchage au moins partielle de la matière carbonée, dont la température est inférieure à environ 300°C.

Au démarrage, l'enceinte du réservoir est remplie de matière carbonée par l'alimentation 4.

L'arbre peut être mis en rotation dès le début ou en cours de fonctionnement. Ensuite, l'air est injecté dans l'extrémité longitudinale inférieure de l'arbre par l'alimentation en air secondaire 12 et du gaz naturel ou du méthane par l'alimentation 11. Le mélange est enflammé par le système d'allumage 13. La chaleur générée par la combustion du gaz est transmise à l'arbre 10, qui la transmet à la matière carbonée qui l'entoure. La transmission de la chaleur se fait par rayonnement et conduction. Avantageusement les bras assurent une transmission de la chaleur dans tout le lit de matière.

Lorsque tout ou partie de la matière carbonée atteint une température de l'ordre de 300°C, elle se pyrolyse (zone I) et produit des gaz combustibles, tels que le H₂, CO, du CH₄, des goudrons et du coke ou charbon.

De l'air primaire est injecté dans la zone II située sous la zone I, le distributeur est tel que l'air est injecté vers le bas afin de ne pas injecter d'air dans la zone de pyrolyse I. En outre, le distributeur assure une répartition la plus homogène possible de l'air dans la zone II.

L'injection de l'air primaire dans la zone de combustion partielle II permet de brûler la matière carbonée produisant du N₂, du CO et du CO₂, tout en générant de la chaleur qui chauffe la matière carbonée dans la zone de pyrolyse. Il peut être avantageusement prévu de préchauffer l'air injecté par la deuxième alimentation, par exemple à 300°C pour éviter un refroidissement du lit. La combustion dans la zone de combustion II apporte la chaleur pour la pyrolyse et le séchage de la matière carbonée dans la zone IV.

Dans la zone de réduction III, le carbone solide, appelé char, est converti en gaz de synthèse par réactions chimiques.

Les réactions principales sont:

C + H₂O → CO + H₂

C + CO₂ → 2CO

Après un certain temps, un équilibre thermique s'établit et les températures dans les différentes zones du lit fixe deviennent stables.

Le syngaz traverse la grille et circule dans l'arbre en direction de l'extrémité longitudinale supérieure 10.1 (flèches G).

Une partie du syngaz est brulée dans l'arbre via l'air secondaire afin de produire de la chaleur et chauffer le four. L'injection de méthane ou de gaz naturel est maintenue tant que la quantité de syngaz produite n'est pas suffisante pour assurer l'apport énergétique de manière autothermique. Et lorsque le débit de syngaz produit est suffisant, l'injection de méthane ou de gaz naturel est interrompue et seule l'injection d'air est maintenue.

La combustion d'une partie du syngaz permet de générer une chaleur à une température suffisante, par exemple au moins 1200°C, pour craquer thermiquement une partie des goudrons produits lors de la pyrolyse, par exemple l'intérieur de l'arbre peut atteindre une température de l'ordre de 1300°C.

Dans un exemple avantageux, on injecte par l'alimentation secondaire 12 de l'air enrichi en oxygène ou de l'oxygène pur, ce qui permet d'avoir une zone à plus haute température pour craquer les goudrons. En effet la combustion de l'oxygène pur génère une température de flamme plus élevée que la combustion de l'air.

Lors de la mise en route du réacteur, l'arbre peut être mis en rotation assurant un brassage de la matière dans chaque zone améliorant la répartition de l'air et/ou des gaz dans la matière et l'homogénéisation de la température dans chaque zone.

A titre d'exemple, on utilise de 30% de la biomasse en combustion pour pouvoir apporter assez de chaleur au réacteur pour le maintenir en température.

Les éléments collectés par l'arbre, notamment le syngaz incondensable, les goudrons condensables et les suies et particules fines entrainées par le flux gazeux, traversent la zone à haute température obtenue en brûlant une partie du syngaz, et en traversant cette zone au moins une partie des goudrons est craquée. La quantité de goudrons craqués dépend du temps de séjour à haute température. Typiquement pour 2s à une température supérieure à 1300°C, 90% des goudrons sont craqués.

L'intérieur de l'arbre est à la fois le lieu d'une génération de chaleur et du craquage des goudrons. Grâce à l'invention, moins de 30% de la matière carbonée est consommée pour apporter la chaleur au système. Le rendement du réacteur est amélioré vis-à-vis de la technologie existante, car la chaleur produite par la combustion partielle du syngaz est transmise au réacteur par le fait que l'arbre est au centre du réacteur.

De manière avantageuse, un système de filtre est disposé en sortie de l'arbre pour capturer les particules et les goudrons résiduels. Le système de filtrage comporte par exemple un lit fixe de charbon actif ou un autre matériau absorbant adapté.

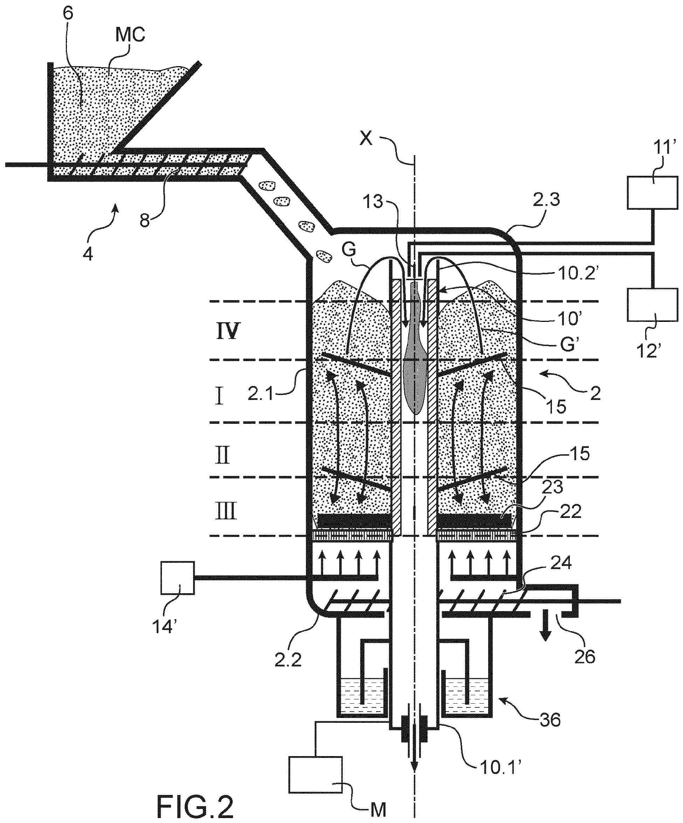

Sur la figure 2, on peut voir un exemple de réacteur de pyro-gazéification R2 à contre-courant.

Les éléments ayant la même fonction et sensiblement la même forme, seront désignés par les mêmes références que dans le réacteur R1.

Le réacteur R2 diffère du réacteur R1 en ce que la collecte des syngaz a lieu au niveau de l'extrémité inférieure 10.1' de l'arbre, l'alimentation en air secondaire 12' et l'alimentation 11' en méthane ou en gaz naturel sont situées au niveau de l'extrémité supérieure de l'arbre 10'. L'alimentation en air primaire 14' est située sous la grille.

En outre, l'ordre des zones est différent. Dans la partie la plus inférieure du lit se trouve la zone de combustion II, au-dessus de laquelle se trouve la zone de réduction III, au-dessus de laquelle se trouve la zone de pyrolyse I et au-dessus de laquelle se trouve la zone de séchage IV.

La première extrémité inférieure 10.1' de l'arbre traverse le fond inférieur de l'enceinte et un joint à eau 36 est prévu entre eux pour assurer l'étanchéité. Celui-ci est similaire au joint à eau 28.

Le fonctionnement du réacteur à contre-courant est le suivant.

Au démarrage, l'enceinte du réservoir est remplie de matière carbonée MC par l'alimentation 4.

Le gaz combustible est enflammé par le dispositif d'allumage.

De l'air primaire est injecté par l'alimentation en bas du réacteur, qui génère une combustion de la matière carbonée, il y a alors production de N₂, de CO et de CO₂ et génération de chaleur. La température dans la zone de combustion est supérieure à 1000°C. Cette chaleur se diffuse dans le lit de matière carbonée qui atteint une température suffisante pour provoquer la pyrolyse de la matière carbonée située dans la zone I, provoquant le dégagement de CO, CO₂ et du CH₄, de goudrons et la production de coke.

La zone de réduction située juste au-dessus de la zone de combustion a une température comprise entre 800°C et 1000°C, dans laquelle le carbone est converti en CO et H₂.

La chaleur transmise par la circulation de gaz chaud et la conduction thermique assure le séchage de la matière carbonée.

Les gaz produits ainsi que les goudrons pénètrent dans l'arbre par son extrémité supérieure (flèches G'). Au début, lorsque le débit de syngaz produit est faible, du méthane ou du gaz naturel est injecté dans l'extrémité longitudinale supérieure de l'arbre par la première alimentation 12'. Le mélange est enflammé par le système d'allumage. Une partie du syngaz est brûlée. La chaleur générée augmente la température à l'intérieur de l'arbre, qui est alors suffisamment élevée pour provoquer un craquage d'au moins une partie des goudrons circulant dans l'arbre. Ainsi ce qui est collecté à l'extrémité inférieure de l'arbre est appauvri en goudron par rapport à ce qui rentre dans l'extrémité supérieure de l'arbre. Lorsque le débit de syngaz produit augmente le débit de méthane ou de gaz naturel est réduit progressivement jusqu'à devenir nul, lorsque le débit de syngaz est suffisant.

Le réacteur R2 est particulièrement intéressant par rapport aux réacteurs à contre-courant de l'état de la technique car il produit un syngaz moins chargé en goudrons.

Les réacteurs R1 et R2 peuvent avantageusement fonctionner en continu : La trémie peut être raccordée à un autre volume ou un sas d'alimentation qui assure qu'il y a toujours de la matière dans la trémie tout en assurant ; notamment dans le réacteur de la figure 1 que les gaz ne puissent s'échapper vers la trémie.

En variante, l'arbre n'est pas rotatif et forme uniquement un conduit central qui collecte les gaz, assure un apport supplémentaire de chaleur au réacteur et permet un craquage d'au moins une partie des goudrons. L'arbre fixe peut avantageusement comporter des bras formant des ailettes permettant de conduire la chaleur au sein de lit. En variante le conduit ne comporte pas de bras.

Grâce à l'invention, le rendement du réacteur à pyro-gazéification est amélioré et le syngaz en sortie du réacteur est plus propre, i.e. il comporte moins de goudrons, il peut donc être directement utilisé dans les moteurs à gaz et les turbines à gaz, notamment dans le cas des réacteurs à contre-courant.

## Revendications

1. Réacteur de pyro-gazéification à lit fixe comportant une enceinte (2) s'étendant selon une direction longitudinale (x) destinée à être orientée verticalement, des moyens (4) pour alimenter l'enceinte en matière carbonée de sorte à former un lit dans l'enceinte (2), situés dans une partie supérieure de l'enceinte (2), un conduit (10) s'étendant le long de la direction longitudinale et situé dans l'enceinte (2) de sorte à être entouré par la matière carbonée, le conduit délimitant avec une paroi latérale de l'enceinte une chambre recevant le lit de matière carbonée, le conduit étant configuré pour s'étendre sur toute la hauteur du lit et être en contact avec celui-ci, le conduit (10) comprenant une première extrémité longitudinale (10.1) destinée à la collecte des produits résultant de la transformation de la matière carbonée dans le réacteur, une alimentation en air secondaire (12) pour injecter de l'air dans le conduit par une deuxième extrémité longitudinale (10.2) du conduit (10), des moyens (11) pour injecter du gaz combustible dans le conduit (10) par la deuxième extrémité longitudinale (10.2) du conduit (10), une alimentation en air primaire (14) pour injecter de l'air dans l'enceinte (2) dans une zone de combustion de la chambre de l'enceinte et un système d'allumage (13) au niveau de la deuxième extrémité longitudinale (10.2) du conduit (10), de sorte à provoquer la combustion du mélange d'air et de gaz, dans lequel le conduit s'étend au centre de l'enceinte et le conduit (10) est formé par un arbre creux monté tournant dans l'enceinte autour d'une direction longitudinale de l'enceinte, ledit réacteur comportant des moyens (M) de mise en rotation de l'arbre, et dans lequel l'arbre comporte des bras (15) s'étendant sensiblement radialement à partir de la surface latérale du conduit (10)

2. Réacteur de pyro-gazéification selon la revendication 1, dans lequel le conduit (10) comporte un revêtement réfractaire.

3. Réacteur de pyro-gazéification selon la revendication 1 ou 2, dans lequel le matériau du conduit (10) et le matériau des bras (15) assurent la conduction de la chaleur de l'intérieur du conduit vers l'extérieur de conduit, le matériau du conduit et des bras étant par exemple de l'Inconel 600 ou de l'Inconel 625.

4. Réacteur de pyro-gazéification selon l'une des revendications 1 à 3, comportant un joint à eau (28) entre l'enceinte (2) et le conduit (10).

5. Réacteur de pyro-gazéification l'une des revendications 1 à 4, comportant des moyens de collecte des produits générés dans le réacteur connectés à la première extrémité du conduit par un presse-étoupe.

6. Réacteur de pyro-gazéification selon l'une des revendications 1 à 5, dans lequel la première extrémité du conduit fait saillie d'un fond supérieur de l'enceinte, et dans lequel l'alimentation en air primaire traverse la paroi latérale de l'enceinte de sorte à injecter de l'air dans le lit de matière carboné.

7. Réacteur de pyro-gazéification selon l'une des revendications 1 à 5, dans lequel la première extrémité (10.1') du conduit fait saillie d'un fond inférieur de l'enceinte et dans lequel l'alimentation en air primaire (14) est située de sorte à injecter de l'air sous le lit de matière carboné.

8. Réacteur de pyro-gazéification selon l'une des revendications 1 à 7, dans lequel les moyens d'alimentation en gaz (11) sont configurés pour qu'au cours du fonctionnement le débit de gaz injecté dans le conduit diminue.

9. Procédé de fonctionnement d'un réacteur de pyro-gazéification selon l'une des revendications précédentes, dans lequel :
- lors d'une phase un mélange d'air et de gaz est brûlé dans le conduit,
- lors d'une étape suivante une partie du gaz de synthèse produit dans le réacteur est brulée dans le conduit, chauffant le réacteur et l'intérieur du conduit, et au moins une partie des goudrons produits dans le réacteur est craquée dans le conduit.

10. Procédé de fonctionnement selon la revendication 9, dans lequel le débit de gaz au niveau des moyens d'alimentation en gaz est réduit au fur et à mesure que le débit de gaz de synthèse augmente, jusqu'à devenir nul.
